# EUROPÄISCHE PATENTSCHRIFT

(11) **EP 3 774 455 B1**
(45) Veröffentlichungstag und Bekanntmachung des Hinweises auf die Patenterteilung: **12.01.2022**
(21) Anmeldenummer: 19706927.1
(22) Anmeldetag: 14.02.2019
(51) Int. Cl.: B60R 21/34

(54) **DEFORMATIONSSTRUKTUR UND FUSSGÄNGERSCHUTZVORRICHTUNG MIT EINER DEFORMATIONSSTRUKTUR**
DEFORMATION STRUCTURE AND PEDESTRIAN PROTECTION DEVICE HAVING A DEFORMATION STRUCTURE
STRUCTURE DÉFORMABLE ET DISPOSITIF DE PROTECTION DE PIÉTONS COMPRENANT UNE STRUCTURE DÉFORMABLE

(30) Priorität: 27.03.2018 DE 102018204656
(43) Veröffentlichungstag der Anmeldung: 17.02.2021
(73) Patentinhaber: Bayerische Motoren Werke Aktiengesellschaft, 80809 München (DE)
(72) Erfinder: STELIHA, Taras, 82140 Olching (DE); AKIF, Oeztzan, 80937 München (DE)
(86) Internationale Anmeldenummer: PCT/EP2019/053697
(87) Internationale Veröffentlichungsnummer: WO 2019/185237

(56) Entgegenhaltungen:
- DE-A1-102015 207 610
- DE-U1-202009 016 759

## Beschreibung

Die vorliegende Erfindung bezieht sich auf eine Deformationsstruktur und auf eine Fußgängerschutzvorrichtung mit einer Deformationsstruktur, die zwischen einem Karosserieaußenhautelement und einem Karossiereträgerelement angeordnet ist.

Ein bekannter Vorderwagen eines Kraftfahrzeugs hat beispielsweise einen Stoßfängerquerträger, der an vorderen Enden von Längsträgern befestigt ist, und eine Stoßfängerverkleidung, wobei zwischen der Stoßfängerverkleidung und dem Stoßfängerquerträger zum Schutz von Fußgängern ein weicher, auf einem vergleichsweise niedrigen Lastniveau verformbarer Schaum angeordnet ist. Der weiche Schaum ist aufgrund eines Fußgängerschutzes angeordnet, um einen Fußgänger gegebenenfalls vor einer direkten unmittelbaren Kollision mit einer harten, steifen Struktur des Kraftfahrzeugs, wie beispielsweise dem Stoßfängerquerträger, zu schützen.

Des Weiteren gibt es ein Erfordernis, dass in einem sehr niedrigen Geschwindigkeitsbereich von bis zu beispielsweise 4 km/h, in dem der Fußgängerschutz aufgrund der geringen Geschwindigkeit nicht relevant ist, das Kraftfahrzeug bei einer Kollision schadensfrei bleibt.

Darüber hinaus gibt es bei einer etwas höheren Geschwindigkeit, die ebenfalls noch nicht für den Fußgängerschutz relevant ist, das Erfordernis, dass ein Schaden bei einer Kollision möglichst klein ist und beispielsweise eine Kühlerstruktur, die sich in dem Vorderwagenbereich befindet, nicht beschädigt wird. Hierfür wäre hilfreich, wenn die Struktur, die sich vor dem Stoßfängerquerträger befindet, bereits hinreichende Absorptionsfähigkeit von Kollisionsenergie aufweist.

Die verschiedenen Anforderungen stehen zum Teil im Gegensatz zueinander und erfordern am Fahrzeugbug einen vergleichsweise langen Fahrzeugüberhang und damit ein höheres Gewicht und eine nachteilige Beeinflussung der Fahrdynamik. Zum Lösen der daraus entstehenden Zielkonflikte wurde beispielsweise in der DE 102010054641 A1 eine Stoßfängeranordnung mit einem Querträger vorgeschlagen, der über Crashboxen an der Fahrzeugkarosserie befestigt ist. In Fahrtrichtung vor dem Querträger ist ein Fußgängerschutzelement für einen weichen Anprall eines Fußgängers ausgebildet. Zusätzlich ist ein schwenkbares Energieabsorptionselement vorgesehen, das vor das Fußgängerschutzelement verschwenkbar ist und hierdurch eine erhöhte Energieabsorption bei Kollisionen ermöglicht, bei denen eine höhere Kollisionsenergieabsorptionsfähigkeit der Crashstruktur des Kraftfahrzeugs erforderlich ist.

Die DE 102012112636 A1 zeigt ebenfalls eine Stoßfängeranordnung mit einem Stoßfängerquerträger und einem Fußgängerschutzelement, das von einem steifen Zustand in einen vergleichsweise weichen Zustand, der einem Fußgängerschutz dient, mittels eines Aktuators umgeschaltet werden kann.

Den in der DE 102010054641 A1 und der DE 102012112636 A1 beschriebenen Stoßfängeranordnungen ist gemeinsam, dass hierfür eine Crash- bzw. Pre-Crash-Sensorik erforderlich ist, wobei auf Grundlage der Ausgangssignale der Sensorik zwischen einem harten, steifen Zustand der Crashstruktur mit hoher Kollisionsenergieabsorptionsfähigkeit und einem weichen Zustand der Crashstruktur mit zu Gunsten des Fußgängerschutzes geringer Kollisionsenergieabsorptionsfähigkeit umgeschaltet werden kann.

Ferner ist aus der DE 102016204264 A1 eine gattungsgemäße Deformationsstruktur bekannt, die zumindest eine erste Lage und eine zweite Lage, die in Deformationsrichtung bzw. Lastrichtung zueinander beabstandet und zueinander verlagerbar angeordnet sind, aufweist. Die erste Lage und die zweite Lage weisen komplementäre Vorsprünge und Vertiefungen auf, die derart ausgebildet sind, dass die Vorsprünge der ersten Lage und die Vertiefungen der zweiten Lage sowie die Vorsprünge der zweiten Lage und die Vertiefungen der ersten Lage ineinander eintauchbar sind. Die erste Lage und die zweite Lage sind über verformbare Stegelemente derart miteinander verbunden, dass bei einem hohen Impuls in Deformationsrichtung die Vorsprünge der ersten Lage in die Vertiefungen der zweiten Lage sowie die Vorsprünge der zweiten Lage in die Vertiefungen der ersten Lage eintauchen, so dass eine Verformung der Deformationsstruktur in Deformationsrichtung auf einem verhältnismäßig niedrigen Kraftniveau erfolgt, und dass bei einem niedrigen Impuls in Deformationsrichtung die Vorsprünge der ersten Lage auf die Vorsprünge der zweiten Lage treffen, so dass eine weitere Verformung der Deformationsstruktur in Deformationsrichtung auf einem verhältnismäßig hohen Kraftniveau erfolgt.

Es ist die Aufgabe der vorliegenden Erfindung, eine Deformationsstruktur und eine Fußgängerschutzvorrichtung mit der Deformationsstruktur für ein Kraftfahrzeug zu schaffen, wobei die Verformung der Deformationsstruktur auf dem verhältnismäßig hohen Kraftniveau zuverlässiger erfolgt.

Diese Aufgabe wird durch eine Deformationsstruktur gelöst, die die Merkmale von Patentanspruch 1 aufweist. Ferner wird diese Aufgabe durch eine Fußgängerschutzvorrichtung gelöst, die die Merkmale von Patentanspruch 11 aufweist. Vorteilhafte Ausgestaltungen der Erfindung sind in den abhängigen Patentansprüchen genannt.

Eine erfindungsgemäße Deformationsstruktur, die auch Energieabsorptionsstruktur genannt werden kann, hat zumindest eine erste Lage und eine zweite Lage, die in Deformationsrichtung bzw. Lastrichtung zueinander beabstandet und zueinander verlagerbar angeordnet sind. Die erste Lage und die zweite Lage weisen komplementäre Vorsprünge und Vertiefungen auf, die derart ausgebildet sind, dass die Vorsprünge der ersten Lage und die Vertiefungen der zweiten Lage sowie die Vorsprünge der zweiten Lage und die Vertiefungen der ersten Lage ineinander eintauchbar sind. Die erste Lage und die zweite Lage sind über verformbare Stegelemente derart miteinander verbunden, dass bei einem hohen Impuls in Deformationsrichtung die Vorsprünge der ersten Lage in die Vertiefungen der zweiten Lage sowie die Vorsprünge der zweiten Lage in die Vertiefungen der ersten Lage eintauchen, so dass eine Verformung der Deformationsstruktur in Deformationsrichtung auf einem verhältnismäßig niedrigen Kraftniveau erfolgt, und dass bei einem niedrigen Impuls in Deformationsrichtung die Vorsprünge der ersten Lage auf die Vorsprünge der zweiten Lage treffen, so dass eine weitere Verformung der Deformationsstruktur in Deformationsrichtung auf einem verhältnismäßig hohen Kraftniveau erfolgt. Der Vorsprung der ersten Lage und der Vorsprung der zweiten Lage sind derart komplementär zueinander ausgebildet, dass bei dem niedrigen Impuls in Deformationsrichtung in seitlicher Richtung, d.h. eine Richtung quer zur Deformationsrichtung, also eine Richtung im Wesentlichen senkrecht zu der Deformationsrichtung, zumindest in die seitliche Richtung ein Formschluss zwischen dem Vorsprung der ersten Lage und dem Vorsprung der zweiten Lage erfolgt.

Die Deformationsstruktur ist abhängig von einem Lastfall, d.h. einem Kollisionsimpuls, auf unterschiedlichen Energieniveaus verformbar und weist damit unterschiedliche Steifigkeiten auf. Das "Umschalten" zwischen den zwei Steifigkeiten erfolgt dabei unabhängig von einer Sensorik bzw. einem Aktuator selbsttätig. Die Einstellung der Steifigkeiten wird dabei durch eine bestimmte geometrisch komplementäre Gestalt der ersten Lage und der zweiten Lage und die Verbindung der Lagen über die Stegelemente bewirkt. Bei dem niedrigen Impuls treffen Vorsprünge gegenüberliegender Lagen aufeinander. Durch den Formschluss zwischen den Vorsprüngen wird eine Wahrscheinlichkeit verringert ist, dass die erste Lage und die zweite Lage in seitlicher Richtung, also eine Richtung quer zu der Deformationsrichtung, d.h. eine Richtung parallel zur Erstreckung der Lagen, weiter zueinander versetzt werden, die Vorsprünge der beiden Lagen wieder außer Eingriff gelangen und hierdurch möglicherweise die Verformung des Deformationselements ungewünscht auf einem niedrigen Kraftniveau erfolgt. Erfindungsgemäß wird demnach sichergestellt, dass sich die benachbarten Lagen gegenseitig an gegenüberliegenden Vorsprüngen zuverlässig abstützen und die weitere Verformung des Deformationselements auf dem verhältnismäßig hohen Kraftniveau erfolgt. Die gegenüberliegenden Vorsprünge, bzw. die Vorsprünge, die im Verlaufe der Kollision in eine gegenüberliegend Lage kommen, haben mit anderen Worten komplementäre Geometrien, die einen gegenseitigen, insbesondere in seitlicher Richtung wirkenden, Formschluss der gegenüberliegenden Vorsprünge ermöglichen.

Gemäß einer Weiterbildung der erfindungsgemäßen Deformationsstruktur weist der Vorsprung der zweiten Lage oder der Vorsprung der ersten Lage eine Vertiefung auf, die derart angepasst ist, dass der Vorsprung der ersten Lage - oder der Vorsprung der zweiten Lage, falls die Vertiefung in der ersten Lage ausgebildet ist - in die Vertiefung eingreifen kann, so dass eine Bewegung der ersten Lage und der zweiten Lage zueinander zumindest in die seitliche Richtung gehemmt, also zumindest behindert oder sogar unterbunden, ist.

Die Vertiefung ermöglicht einen Formschluss zwischen den gegenüberliegenden Vorsprüngen in die seitliche Richtung. Der Vorsprung, der in die Vertiefung des gegenüberliegenden Vorsprungs eingreift, kann seitlich nicht ausweichen, wenn eine Kollisionskraft in Kollisionsrichtung des Deformationselements wirkt, da hierfür seitliche Ränder der Vertiefung überwunden werden müssten, was wiederum durch die wirkende Kollisionskraft erschwert ist. Der Vorsprung, der in die Vertiefung eingreift, stößt bei einer Seitwärtsbewegung an dem entsprechenden Rand der Vertiefung an.

Gemäß einer weiteren Weiterbildung der erfindungsgemäßen Deformationsstruktur weist/weisen der Vorsprung der zweiten Lage und/oder der Vorsprung der ersten Lage eine Stufe auf, die derart angepasst ist, dass der Vorsprung der ersten Lage - oder der Vorsprung der zweiten Lage, falls die Stufe an dem ersten Vorsprung ausgebildet ist - mit der Stufe derart eingreifen kann, so dass eine Bewegung der ersten Lage gegenüber der zweiten Lage zumindest in die seitliche Richtung gehemmt, also zumindest behindert oder sogar unterbunden, ist.

Die Wirkungsweise der Stufe ist ähnlich der Vertiefung, wobei die Stufe eine Bewegung der benachbarten Lagen in lediglich eine seitliche Richtung (Querrichtung) hemmt, wohingegen die vorstehend genannte Vertiefung eine Bewegung auch in eine weitere, insbesondere die entgegengesetzte seitliche Richtung, hemmen kann. Die Stufe kann hierfür hinreichend hoch ausgebildet sein, so dass sichergestellt ist, dass der entsprechende Vorsprung in dem Fall der Kollision mit dem niedrigen Impuls in Eingriff mit der Stufe des gegenüberliegenden Vorsprungs kommt.

Es ist auch möglich eine Vertiefung und eine Stufe an einem Vorsprung miteinander zu kombinieren, d.h. einen Vorsprung mit einer Vertiefung zusätzlich mit einer Stufe auszubilden, die höher als der Rand der Vertiefung ist.

Gemäß einer Weiterbildung sind die erste Lage und die zweite Lage durch Verformung der Stegelemente ferner in eine Richtung parallel zueinander verlagerbar.

Insbesondere können bei der Deformationsstruktur die Stegelemente derart ausgebildet sein, dass sie bei dem hohen Kollisionsimpuls spröde und/oder plastisch versagen und wobei die Stegelemente bei dem niedrigen Kollisionsimpuls entsprechend einem Filmscharnier wirken.

Die als Filmscharnier ausgebildeten Stegelemente können dabei eine Schwenkbewegung der ersten Lage und der zweiten Lage zueinander bewirken, bei der die erste Lage und die zweite Lage parallel zueinander sowie in Deformationsrichtung, also aufeinander zu, verlagert werden.

Hierdurch ist eine definierte Schwenkbewegung der ersten Lage und der zweiten Lage aufeinander zu möglich und die steifigkeitserhöhende Stellung der ersten Lage und der zweiten Lage zueinander zuverlässig einnehmbar.

Bei dem hohen Kollisionsimpuls verhindert das Versagen der Stegelemente die Schwenkbewegung der ersten Lage und der zweiten Lage zueinander. Die erste Lage und die zweite Lage werden wegen des Versagens der Stegelemente im Wesentlichen ohne seitliche Ausweichbewegung lediglich in Deformationsrichtung aufeinander zu verlagert.

Gemäß einer bevorzugten Weiterbildung sind die Stegelemente als Wandelemente bzw. Flächenelemente ausgebildet, die sich in Breitenrichtung der ersten Lage und der zweiten Lage erstrecken. Insbesondere können sich dabei die Stegelemente über eine gesamte Breite der Deformationsstruktur erstrecken.

Bevorzugt sind bei der erfindungsgemäßen Deformationsstruktur die erste Lage und die zweite Lage im Wesentlichen identisch ausgebildet bzw. geformt.

Dies erleichtert eine Herstellung der Deformationsstruktur. Ferner sind hierdurch komplementäre Vorsprünge und Vertiefungen auf einfache Weise möglich.

Gemäß einer bevorzugten Weiterbildung der Deformationsstruktur sind die Vorsprünge der ersten Lage und die Vertiefungen der zweiten Lage sowie die Vertiefungen der ersten Lage und die Vorsprünge der zweiten Lage in einer Ausgangslage der Deformationsstruktur einander gegenüberliegend angeordnet.

Hierdurch kann die Deformationsstruktur bei einem niedrigen Kollisionsimpuls auf einem verhältnismäßig niedrigen Kraftniveau in Deformationsrichtung verformt werden.

Die Deformationsstruktur kann bevorzugt aus einem Kunststoffmaterial ausgebildet sein.

Hierdurch kann die Deformationsstruktur leicht und korrosionsbeständig ausgeführt werden.

Die Deformationsstruktur kann hierbei bevorzugt einstückig ausgebildet sein.

Hierdurch ist eine Herstellung vereinfacht und eine Zahl an Bauteilen ist hierdurch besonders gering.

Die Herstellung der Deformationsstruktur aus Kunststoff, insbesondere der einstückigen Deformationsstruktur, kann beispielsweise durch Extrusion oder durch ein additives Herstellungsverfahren erfolgen.

Hierdurch ist die Deformationsstruktur besonders effizient bei geringen Kosten herstellbar.

Gemäß einer besonders bevorzugten Weiterbildung sind die erste Lage und die zweite Lage jeweils in Form einer gewellten Platte ausgebildet. Wellenberge und Wellentäler bilden dabei die Vorsprünge und Vertiefungen.

Die Vorsprünge und Vertiefungen (Wellenberge und Wellentäler) können bevorzugt eine trapezförmige Gestalt aufweisen.

Durch diese geometrische Gestalt sind die Vorsprünge und Vertiefungen der gegenüberliegenden Lagen leicht ineinander verschiebbar.

Die Deformationsstruktur gemäß der vorliegenden Erfindung kann eine Vielzahl von Lagen aufweisen, wobei zwei benachbarte Lagen jeweils eine erste Lage und eine zweite Lage bilden. Beispielsweise kann die Deformationsstruktur drei, vier, fünf, sechs oder mehr Lagen aufweisen.

Gemäß einer bevorzugten Weiterbildung der Deformationsstruktur sind die Verbindungsstege in einem Lagenzwischenraum zweier benachbarter Lagen angeordnet und die Verbindungsstege zweier benachbarter Lagenzwischenräume sind hinsichtlich ihrer Verlagerungswirkung in entgegengesetzte Richtungen orientiert. Mit Verlagerungswirkung ist dabei beispielsweise eine Schwenkbewegung in entgegengesetzte Richtungen gemeint.

Hierdurch soll eine gleichmäßige Verformung der Deformationsstruktur mit der Vielzahl von Lagen bei dem niedrigen Kollisionsimpuls erzielt werden.

Die vorliegende Erfindung betrifft auch eine Fußgängerschutzvorrichtung für ein Kraftfahrzeug mit einer erfindungsgemäßen Deformationsstruktur. Hierbei ist die Deformationsstruktur bevorzugt zwischen einem Fahrzeugaußenhautelement und einem Karosserieträgerelement angeordnet.

Die Deformationsstruktur stützt sich dabei bei einem Kollisionsimpuls an dem Karosserieträgerelement ab.

Das Fahrzeugaußenhautelement kann eine Stoßfängerverkleidung sein. Das Karosserieträgerelement kann ein Stoßfängerquerträger sein.

Durch die erfindungsgemäße Fußgängerschutzvorrichtung mit der Deformationsstruktur ist keine Kollisionssensorik und keine Aktuatorik notwendig, um gegebenenfalls einen mechanischen Mechanismus aktiv zu verriegeln oder zu entriegeln und damit zwischen einer Struktur mit einem "weichen" Deformationsverhalten und einem "steifen" Deformationsverhalten bedarfsweise umschalten zu können. Die erfindungsgemäße Fußgängervorrichtung mit der Deformationsstruktur wirkt selbsttätig abhängig von einem Kollisionsimpuls, der wiederum von einem Kollisionsgeschwindigkeit des Kraftfahrzeugs abhängt. Die Deformationsrichtung ist insbesondere eine Kollisionsrichtung und ist bei der Anwendung zum Fußgängerschutz im Kraftfahrzeugbug im Wesentlichen eine Fahrzeuglängsrichtung.

Grundsätzlich erstreckt sich der Schutzbereich der erfindungsgemäßen Deformationsstruktur jedoch auch auf alle anderen Anwendungsbereiche im Kraftfahrzeugbereich oder auch anderen Technologiefeldern, bei denen eine Verformbarkeit einer Deformationsstruktur auf unterschiedlichen Lastniveaus abhängig von einem Lastfall erforderlich ist.

Demnach erfolgt bei dem niedrigen Kollisionsimpuls und damit der niedrigen Kollisionsgeschwindigkeit des Kraftfahrzeugs ein Verschwenken der gegenüberliegenden Lagen derart, dass sich die Vorsprünge der gegenüberliegenden Lagen gegenüberliegen und aufeinander abstützen. Die Deformationsstruktur wirkt demnach steif. Bei dem hohen Kollisionsimpuls und damit der hohen Kollisionsgeschwindigkeit erfolgt kein Verschwenken der gegenüberliegenden Lagen, so dass die gegenüberliegende Vorsprünge und Vertiefungen der gegenüberliegenden Lage ineinander verlagerbar sind. Damit reagiert die Deformationsstruktur über eine längere Verformungsstrecke weicher.

Beispielsweise kann die Fußgängerschutzvorrichtung derart ausgebildet sein, dass bei einem Kollisionsimpuls, der bis zu einer Schwellwertgeschwindigkeit des Kraftfahrzeugs erzeugt wird, die Deformationstruktur steifer reagiert und bei einer höheren Kraft verformt wird. Damit kann bei der geringen Kollisionsgeschwindigkeit eine Kollisionslast auf das dahinterliegende Karosserieelement übertragen werden - bei einer sehr geringen Geschwindigkeit - oder es erfolgt zum Schutz dahinterliegender Bauteile eine hinreichende Energieabsorption durch die Deformationsstruktur - bei einer etwas höheren Geschwindigkeit, die jedoch unterhalb der Schwellwertgeschwindigkeit ist. In jedem Fall können damit die Reparaturkosten verringert werden, wobei insbesondere bei der sehr geringen Geschwindigkeit - beispielsweise bei sogenannten Parkremplern - die Reparaturkosten gegebenenfalls auf das Ausbessern von beispielsweise Lackschäden begrenzt werden kann.

Die Schwellwertgeschwindigkeit kann beispielsweise 20 km/h oder dergleichen betragen.

Ferner kann die Fußgängerschutzvorrichtung derart ausgebildet sein, dass bei einem Kollisionsimpuls, der ab einschließlich der Schwellwertgeschwindigkeit des Kraftfahrzeugs erzeugt wird, die Deformationsstruktur weicher reagiert und bei einer geringeren Kraft verformt wird. Dies ist bei der frontalen Kollision des Fußgängers mit dem Kraftfahrzeug ab der Schwellwertgeschwindigkeit besonders vorteilhaft, da hierbei geringere Kollisionskräfte auf den Fußgänger wirken.

Vorstehend aufgeführte Weiterbildungen der Erfindung können soweit möglich und sinnvoll beliebig miteinander kombiniert werden.

Es folgt eine Kurzbeschreibung der Figuren.
Fig. 1 zeigt schematisch in einer Perspektivansicht eine Deformationsstruktur gemäß einem ersten Ausführungsbeispiel der vorliegenden Erfindung.
Fig. 2 zeigt schematisch in einer Seitenansicht die Deformationsstruktur gemäß dem ersten Ausführungsbeispiel der vorliegenden Erfindung.
Figuren 3a und 3b zeigen schematisch in einer Seitenansicht die Deformationsstruktur gemäß dem ersten Ausführungsbeispiel der vorliegenden Erfindung in einem Kollisionslastfall mit einem niedrigen Kollisionsimpuls.
Figuren 4a und 4b zeigen schematisch in einer Seitenansicht die Deformationsstruktur gemäß dem ersten Ausführungsbeispiel der vorliegenden Erfindung in einem Kollisionslastfall mit einem hohen Kollisionsimpuls.
Figur 5 zeigt schematisch in einer Seitenansicht eine Deformationsstruktur gemäß einem zweiten Ausführungsbeispiel.
Figur 6 zeigt schematisch in einer Seitenansicht die Deformationsstruktur gemäß dem zweiten Ausführungsbeispiel in einem Kollisionslastfall mit einem niedrigen Kollisionsimpuls.

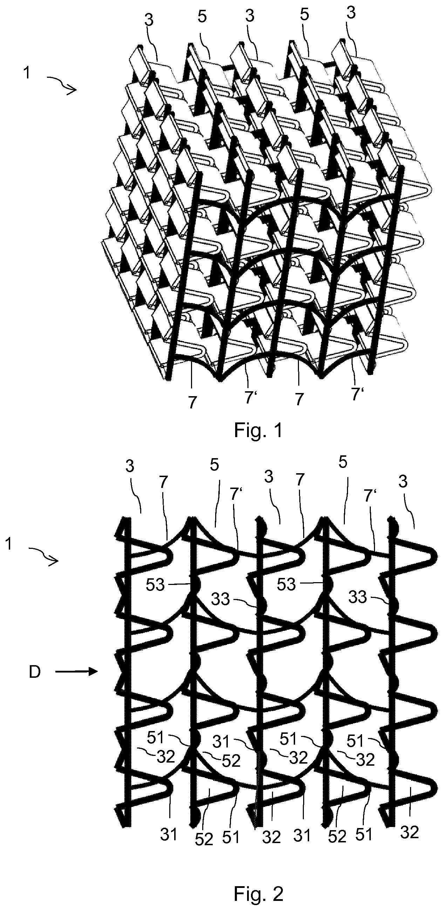

Im Folgenden sind Ausführungsbeispiele der vorliegenden Erfindung unter Bezugnahme auf Figuren 1 bis 6 beschrieben.

Figur 1 zeigt in einer perspektivischen Ansicht eine Deformationsstruktur 1 gemäß einem ersten Ausführungsbeispiel der vorliegenden Erfindung. Die Deformationsstruktur 1 ist an einem Frontend eines Kraftfahrzeugvorderwagens, insbesondere einem Kraftfahrzeugbug, vor einem nicht gezeigten Stoßfängerquerträger an Stelle eines bekannten Fußgängerschutzschaums montiert. Insbesondere ist die Deformationsstruktur 1 in einem Raum zwischen einer Fahrzeugaußenhaut, das heißt einer Stoßfängerverkleidung, und dem Stoßfängerquerträger angeordnet.

Wie in Figur 1 gezeigt ist, hat die Deformationsstruktur 1 eine Reihe hintereinander angeordneter Lagen 3, 5, 3, 5, 3. Die Lagen 3, 5, 3, 5, 3 sind zueinander beabstandet und über Verbindungsstege 7, 7', die Stegelemente gemäß der vorliegenden Erfindung bilden, miteinander verbunden.

In Figur 2 ist eine Seitenansicht der Deformationsstruktur 1 gezeigt, wobei eine Deformationsrichtung D der Deformationsstruktur 1 in der Figur 2 von links nach rechts verläuft und durch einen Pfeil dargestellt ist. Die Deformationsrichtung D ist in diesem Fall eine Fahrzeuglängsrichtung. Eine Hochrichtung in der Zeichenebene kann bevorzugt einer Fahrzeughochrichtung oder einer Fahrzeugquerrichtung entsprechen. In dieser Deformationsrichtung weist die Deformationsstruktur 1 seine Deformationsfunktion auf. Auf der linken Seite der Figur 2 ist hierbei insbesondere eine nicht gezeigte Stoßfängerverkleidung und auf der rechten Seite ein nicht gezeigter Stoßfängerquerträger angeordnet. Die Lagen 3, 5, 3, 5, 3 haben einen im Wesentlichen identischen Aufbau. Eine erste Lage 3 von links besteht aus einander abwechselnden Vorsprüngen 31 und Vertiefungen 32. Ebenso besteht die zweite Lage 5 von links aus einander abwechselnden Vorsprüngen (Wellenberge) 51 und Vertiefungen (Wellentäler) 52. Daran schließen sich weitere Lagen 3, 5 und 3 an. Zwei benachbarte Lagen 3 und 5 sind beabstandet zueinander angeordnet und mit Verbindungsstegen 7 bzw. 7' miteinander verbunden. Die Verbindungsstege 7, 7' sind im Falle einer Last, die in Deformationsrichtung D wirkt, deformierbar ausgebildet. In Fahrzeugquerrichtung kann die Deformationsstruktur 1 mehrere Reihen von Verbindungsstegen 7, 7' aufweisen, wie insbesondere in der perspektivischen Ansicht von Fig. 1 teilweise zu sehen ist. Die in der Figur 2 nach rechts ausgebildeten Vorsprünge 51 der Lagen 5 weisen an ihren vorderen Enden Vertiefungen 53 auf. Ebenso weisen die in der Figur 2 nach rechts ausgebildeten Vorsprünge 31 der Lagen 3 an ihren vorderen Enden Vertiefungen 33 auf. Die nach rechts ausgebildeten Vertiefungen 33, 53 der Lagen 3, 5 haben eine derartige Gestalt, dass vordere Enden der nach links ausgebildeten Vorsprünge 51 bzw. 31 der Lagen 5, 3 in die Vertiefungen 33 bzw. 53 eingreifen können.

Die Deformationsstruktur 1 ist bevorzugt aus einem Kunststoffmaterial hergestellt, wodurch die Deformationsstruktur 1 kostengünstig hergestellt werden kann und hinreichend leicht ausgebildet werden kann. Insbesondere kann die Deformationsstruktur 1 mittels eines additiven Fertigungsverfahrens oder eines Extrusionsverfahrens in einem Stück hergestellt werden. Alternativ könnten die Lagen 3, 5 auch getrennt hergestellt werden und anschließend mittels eines geeigneten Verfahrens über die Stege miteinander verbunden werden. Die Stege könnten beispielsweise nachträglich anextrudiert werden.

Die Lagen könnten alternativ auch aus einem metallischen Werkstoff, beispielsweise Aluminium oder eine Aluminiumlegierung, hergestellt sein und dann in einem weiteren Verfahrensschritt über ein Extrusionsverfahren mit den Stegen verbunden werden.

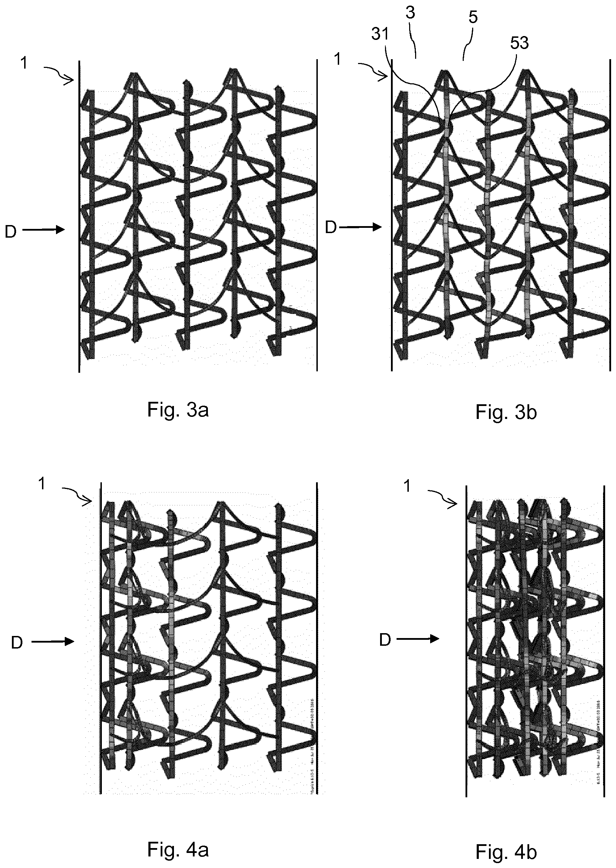

Unter Bezugnahme auf Figuren 3a, 3b, 4a und 4b ist eine Funktion der Deformationsstruktur 1 bei unterschiedlichen Kollisionslastfällen dargestellt. Bei einer Frontalkollision des Kraftfahrzeugs mit einem Gegenstand oder einer Person wirkt eine Last, oder zumindest eine Resultierende einer Kollisionslast, in Fahrzeuglängsrichtung auf die Deformationsstruktur 1, wobei die Lagen 3 unter Verformung der Verbindungsstege 7, 7' in Richtung der Lagen 5 verschoben werden. In der Ausgangslage der Deformationsstruktur 1, welche in Figur 2 gezeigt ist, liegen sich die Vorsprünge 31 der Lagen 3 und die Vertiefungen 52 der Lagen 5 sowie die Vertiefungen 32 der Lagen 3 und die Vorsprünge 51 der Lagen 5 gegenüber. Wären die Lagen 3 und die Lagen 5 nicht über die Verbindungsstege 7, 7' miteinander verbunden, könnten angrenzenden Lagen 3, 5 von dieser Ausgangslage im Wesentlichen ungehindert mit nur geringem Wiederstand aufeinander zu und ineinander verschoben werden.

Figuren 3a und 3b zeigen einen Kollisionslastfall bei einem niedrigen Kollisionsimpuls, der beispielsweise bei einer Kollisionsgeschwindigkeit des Kraftfahrzeugs von unter einer vorgegebenen Kollisionsgeschwindigkeit von 20 km/h stattfindet und der für einen Fußgängerschutz weniger relevant ist. Figuren 4a und 4b zeigen einen Kollisionslastfall bei einem hohen Kollisionsimpuls, der beispielsweise bei einer Kollisionsgeschwindigkeit des Kraftfahrzeugs von gleich oder oberhalb der vorgegebenen Kollisionsgeschwindigkeit 20 km/h stattfindet. Die vorgegebene Kollisionsgeschwindigkeit ist hierbei lediglich beispielhaft genannt und kann auch einen anderen Wert aufweisen.

Zunächst ist unter Bezugnahme auf Figuren 3a bis 3b eine Funktion der Deformationsstruktur 1 bei der Kollision des Kraftfahrzeugs mit der Kollisionsgeschwindigkeit von weniger als 20 km/h beschrieben.

Während in Figur 2 der Zustand vor Beginn der Verformung der Deformationsstruktur 1 gezeigt ist, zeigt Figur 3a schließlich eine beginnende Verformung der Verbindungsstege 7, 7' unter der Kollisionslast mit dem niedrigen Kollisionsimpuls. Die Verbindungsstege 7, 7' sind so angeordnet und gestaltet, dass bei dem niedrigen Kollisionsimpuls die benachbarten Lagen 3, 5 eine Schwenkbewegung durchlaufen, während sie zueinander gedrückt werden. Die Verbindungsstege 7, 7' bilden dabei gegebenenfalls sogenannte Filmgelenke, die die Schwenkbewegung unterstützen bzw. die Schwenkbahn definieren. Mit dieser Schwenkbewegung erfolgt zusätzlich zu der Bewegung aufeinander zu eine parallele Verschiebung der benachbarten Lagen 3 und 5 gegeneinander. Dabei gelangen die Vorsprünge 31 der Lagen 3 in zu den Vorsprüngen 51 der Lagen 5 gegenüberliegende Stellung, wie in Figuren 3a und 3b gezeigt ist. In Figuren 3a und 3b ist gezeigt, wie die Oberseiten bzw. Stirnseiten der Vorsprünge 31 der Lagen 3 in Kontakt mit den Oberseiten bzw. Stirnseiten der Vorsprünge 51 der Lagen 5 gelangen. Dabei tauchen die in den Figuren nach rechts gerichteten Vorsprünge 31 und 51 in Vertiefungen 53 bzw. 33 der in den Figuren nach links gerichteten Vorsprünge 51 bzw. 51 ein. Hierdurch wird ein Formschluss zwischen den gegenüberliegenden Vorsprüngen der Lagen 3 und 5 erzeugt, so dass eine weitere Schwenkbewegung bzw. eine weitere Seitwärtsbewegung der Lagen 3 und 5 zueinander unterbunden ist. Die Vertiefungen 33 und 53 sind derart ausgebildet, dass gegenüberliegende Vorsprung leicht in die Vertiefung eintauchen kann. Dabei ist ein Rand der Vertiefung in Richtung der Bewegung des eingreifenden Vorsprungs höher ausgebildet als ein gegenüberliegender Rand. Dies erleichtert zum einen das Ineingriffkommen des entsprechenden Vorsprungs mit der Vertiefung und erschwert das Außereingriffkommen. Eine weitere Verformung der Deformationsstruktur 1 in die Kollisionsrichtung bzw. Deformationsrichtung kann mit dem beschriebenen Eingriff der gegenüberliegenden Vorsprünge lediglich unter Verformung der Vorsprünge 31 und 51 erfolgen, die bei einem verhältnismäßig hohen Kraftniveau erfolgt. Hierdurch hat die Deformationsstruktur 1 in dem Kollisionsgeschwindigkeitsbereich unterhalb von ca. 20 km/h eine verhältnismäßig hohe Steifigkeit.

Damit überträgt im Fall der langsamen Kollisionsgeschwindigkeit die Deformationsstruktur 1 je nach Kollisionslastniveau die Kollisionslast direkt auf eine dahinter liegende Struktur des Kraftfahrzeugs, d.h. den Stoßfängerquerträger, oder die einzelnen Lagen 3, 5 der Deformationsstruktur 1 versagen nach Aufeinandertreffen der Vorsprünge 31, 51 spröde durch Brechen oder/und versagen durch plastische Verformung auf einem höheren Lastniveau als bei der schnelleren Kollisionsgeschwindigkeit.

Insbesondere kann die Deformationsstruktur 1 derart ausgelegt sein, dass sie bei Kollisionsgeschwindigkeiten von beispielsweise weniger als 4 km/h eine Kollisionslast ohne Versagen der Deformationselemente 3 auf die Crashstruktur übertragen kann. D.h. die Verbindungsstege 7, 7' werden lediglich elastisch verformt und die Struktur der Lagen 3 und 5 selbst versagt nicht. Dies ist vorteilhaft, wenn bei sogenannten Parkremplern oder dergleichen kein reparaturbedürftiger Schaden am Kraftfahrzeug entstehen soll, und hat einen Einfluss auf beispielsweise eine Versicherungseinstufung des Kraftfahrzeugs.

Im Folgenden ist unter Bezugnahme auf Figuren 4a und 4b eine Funktion der Deformationsstruktur 1 bei der Kollision des Kraftfahrzeugs mit der Kollisionsgeschwindigkeit gleich oder größer als 20 km/h beschrieben.

Während in Figur 2 der Zustand vor Beginn der Verformung der Deformationsstruktur 1 gezeigt ist, zeigt Figur 4a schließlich eine beginnende Verformung der Verbindungsstege 7, 7' unter der Kollisionslast mit dem hohen Kollisionsimpuls. Die Verbindungsstege 7, 7' sind so angeordnet und gestaltet, dass diese bei dem hohen Kollisionsimpuls versagen bzw. mehr oder weniger zusammengefaltet werden, so dass diese keine Filmgelenkwirkung entfalten können. Die Massenträgheit der Lagen 3, 5 ist bei dem hohen Kollisionsimpuls dabei insbesondere so groß, dass die Verbindungsstege 7, 7' keine seitliche Ausweichbewegung der Lagen 3 und 5 bewirken bzw. unterstützen können. Hierdurch werden die Vorsprünge 31 der Lagen 3 und die Vertiefungen 52 der Lagen 5 sowie die Vorsprünge 51 der Lagen 5 und die Vertiefungen 32 der Lagen 3 direkt aufeinander zubewegt. Im weiteren Verlauf der Kollision und Verformung der Deformationsstruktur 1, der in Fig. 4b gezeigt ist, werden die Vorsprünge 31 der Lagen 3 vollständig in die Vertiefungen 52 der Lagen 5 geschoben. Ebenso werden die Vorsprünge 51 der Lagen 5 vollständig in die Vertiefungen 32 der Lagen 3 geschoben. Da hierzu im Wesentlichen keine Verformung der Struktur der Lagen 3 oder der Lagen 5 erforderlich ist, erfolgt eine Verformung der Deformationstruktur 1 (zumindest bis zu dem in Fig. 4b gezeigten Zustand) auf einem verhältnismäßig niedrigen Kraftniveau.

Dies ist insoweit vorteilhaft, da es ab der Kollisonsgeschwindigkeit von ungefähr 20 km/h wichtig ist, dass das Frontend des Kraffahrzeugvorderwagens, und insbesondere die Stoßfängerverkleidung in Verbindung mit der Deformationsstruktur 1 hinreichend weich bei einem geringen Verformungskraftniveau zum Schutz eines Fußgängers reagiert. Ist der Kollisionsgegner ein Fußgänger wirkt demnach bei einer Geschwindigkeit von ungefähr 20 km/h und mehr vorteilhaft eine verhältnismäßig geringe Kraft auf den Fußgänger.

Insgesamt kann durch die erfindungsgemäße Deformationsstruktur 1 somit ein Zielkonflikt gelöst werden, der zum Einen bei sehr niedrigen Kollisionsgeschwindigkeiten, die für den Fußgängerschutz nicht relevant sind, eine hinreichend große Steifigkeit des Deformationsstruktur 1 bzw. ein hinreichend großes Verformungskraftniveau der Deformationsstruktur 1 ermöglicht und bei einer etwas höheren Kollisionsgeschwindigkeit, die für den Fußgängerschutz relevant ist, einen hinreichenden Fußgängerschutz durch ein niedriges Verformungskraftniveau gewährleistet.

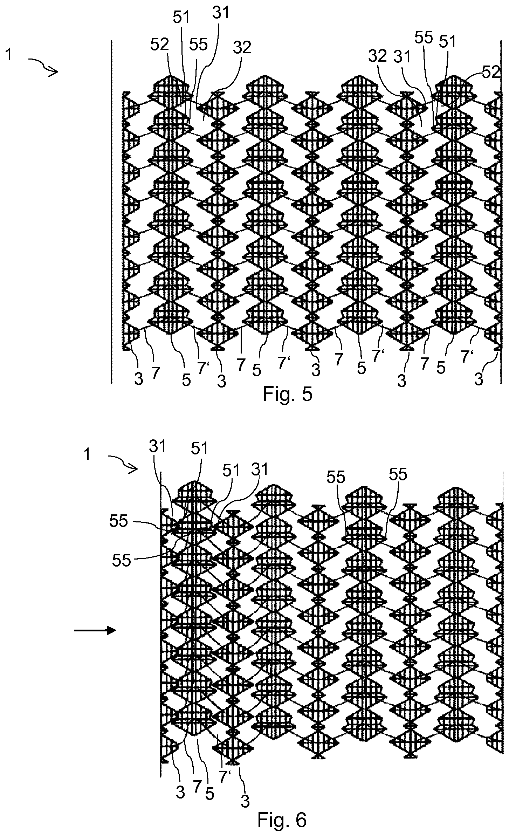

In Figuren 5 und 6 ist eine Deformationsstruktur 1 gemäß einem zweiten Ausführungsbeispiel gezeigt. Analog dem ersten Ausführungsbespiel weist die Deformationsstruktur 1 gemäß dem zweiten Ausführungsbeispiel abwechselnd Lagen 3 und 4 auf, die mittels verformbaren Stegelementen 7, 7' beabstandet zueinander miteinander verbunden sind. Die Lagen 3 weisen abwechselnd Vorsprünge 31 und Vertiefungen 32 auf. Die Lagen 5 weisen abwechselnd Vorsprünge 51 und Vertiefungen 52 auf. Die Vorsprünge 31 der Lagen 3 sind derart komplementär zu den Vertiefungen 52 der Lagen 5 ausgebildet, dass sie in die Vertiefungen 52 eintauchen können. Die Vorsprünge 51 der Lagen 5 sind ebenfalls derart komplementär zu den Vertiefungen 32 der Lagen 3 ausgebildet, dass sie in die Vertiefungen 32 eintauchen können. Die Vorsprünge 51 der Lagen 5 weisen jeweils eine Stufe 55 auf.

Die Deformationsstruktur 1 gemäß dem zweiten Ausführungsbeispiel ist analog der Deformationsstruktur 1 gemäß dem ersten Ausführungsbeispiel zur Aufnahme einer Kollisionslast D ausgebildet und funktioniert dem Grunde nach, wie in Bezugnahme auf das erste Ausführungsbeispiel bereits beschrieben. Die Kollisionslast D in Figuren 5 und 6 wirkt von links nach rechts im Wesentlichen senkrecht zu Mittelebenen der Lagen 3 und 5. Figur 5 zeigt den Zustand der Deformationsstruktur 1 vor einer Deformation. Figur 6 zeigt eine beginnende Verformung der Deformationsstruktur 1 durch die Kollisionslast D mit einem verhältnismäßig geringen Kollisionsimpuls. Im Fall des verhältnismäßig geringen Kollisionsimpulses, der in Fig. 6 gezeigt ist, bewirken die Stegelemente 7, 7' ein Verschwenken der Lagen 3 und 5 zueinander, so dass die Vorsprünge 31 auf die Vorsprünge 51 treffen. Dabei treffen die Vorsprünge 31 auf die Stufen 55 der Vorsprünge 51, wobei die Vorsprünge 31 mit den Stufen 55 in Eingriff gelangen. Hierdurch wird eine weitere Verlagerung der Lagen 3 und 5 in die seitliche Richtung, d.h. eine Querrichtung zur Deformationsrichtung, unterbunden. Hierdurch ist sichergestellt, dass die Vorsprünge 31 und 51 in Kontakt bleiben und die Deformationsstruktur 1 damit die gewünschte hohe Steifigkeit aufweist.

Eine Verformung der Deformationsstruktur 1 durch eine Kollisionslast D mit einem verhältnismäßig großem Kollisionsimpuls ist in den Figuren nicht dargestellt. Hierbei tauchen gegenüberliegenden Vorsprünge 31, 51 und Vertiefungen 52, 32 alalog dem ersten Ausführungsbespiel bei einer niedrigen Deformationskraft der Deformationsstruktur 1 ineinander ein.

Im Unterschied zur Deformationsstruktur 1 gemäß dem ersten Ausführungsbeispiel sind die Lagen 3 und 5 der Deformationsstruktur 1 gemäß dem zweiten Ausführungsbeispiel nicht im Wesentlichen identisch sondern unterschiedlich ausgeführt. Beispielsweise weisen lediglich die die Vorsprünge 51 der Lagen 5 die Stufen 55 auf. Hierbei weisen sowohl die Vorsprünge 51 der Lagen 5, die in Figuren 5 und 6 in die rechte Richtung vorspringen, als auch die Vorsprünge 51 der Lagen 5, die in Figuren 5 und 6 in die linke Richtung vorspringen, die Stufen 55 auf. Die Vorsprünge 31 der Lagen 3 sind komplementär zum formschlüssigen Eingriff mit den Stufen 55 der Vorsprünge 51 der Lagen 5 ausgebildet.

Es ist eine Vielzahl weiterer Ausführungen der Lagen sowie der zugehörigen Vorsprünge und Vertiefungen denkbar, wobei gegenüber liegende Vorsprünge bzw. im Verlauf der Kollision in eine gegenüberliegende Stellung gelangende Vorsprünge benachbarter Lagen einen formschlüssigen Eingriff der entsprechenden gegenüberliegenden Vorsprünge erlauben.

## Patentansprüche

1. Deformationsstruktur (1) mit zumindest einer ersten Lage (3) und einer zweiten Lage (5), die in eine Deformationsrichtung zueinander beabstandet und zueinander verlagerbar angeordnet sind, wobei die erste Lage (3) und die zweite Lage (5) komplementäre Vorsprünge (31, 51) und Vertiefungen (32, 52) aufweisen, die derart ausgebildet sind, dass die Vorsprünge (31) der ersten Lage (3) und Vertiefungen (52) der zweiten Lage (5) sowie die Vorsprünge (51) der zweiten Lage (5) und Vertiefungen (32) der ersten Lage (3) ineinander eintauchbar sind, wobei die erste Lage (3) und die zweite Lage (5) über verformbare Stegelemente (7, 7') derart miteinander verbunden sind, dass bei einem hohen Impuls in Deformationsrichtung die Vorsprünge (31) der ersten Lage (3) in Vertiefungen (52) der zweiten Lage (5) sowie Vorsprünge (51) der zweiten Lage (5) in Vertiefungen (32) der ersten Lage (3) eintauchen, so dass eine Verformung der Deformationsstruktur (1) in Deformationsrichtung auf einem niedrigen Kraftniveau erfolgt, und bei einem niedrigen Impuls in Deformationsrichtung die Vorsprünge (31) der ersten Lage (3) auf die Vorsprünge (51) der zweiten Lage (5) treffen, so dass eine Verformung der Deformationsstruktur (3) in Deformationsrichtung auf einem hohen Kraftniveau erfolgt,
**dadurch gekennzeichnet, dass**
der Vorsprung (31) der ersten Lage (3) und der Vorsprung (51) der zweiten Lage (5) derart komplementär zueinander ausgebildet sind, dass bei dem niedrigen Impuls in Deformationsrichtung in seitlicher Richtung zumindest in seitlicher Richtung ein Formschluss zwischen dem Vorsprung (31) der ersten Lage (3) und dem Vorsprung (51) der zweiten Lage (5) erfolgt.

2. Deformationsstruktur nach Patentanspruch 1, wobei der Vorsprung (51) der zweiten Lage (5) oder der Vorsprung (31) der ersten Lage (3) eine Vertiefung (53, 33) aufweist, die derart angepasst ist, dass der Vorsprung (31) der ersten Lage (3) bzw. der Vorsprung (51) der zweiten Lage (5) in die Vertiefung (53, 33) eingreifen (eintauchen) kann, so dass eine Bewegung der ersten Lage (3) und der zweiten Lage (5) zueinander zumindest in die seitliche Richtung gehemmt ist.

3. Deformationsstruktur nach Patentanspruch 1 oder 2, wobei der Vorsprung (51) der zweiten Lage (5) und/oder der Vorsprung (31) der ersten Lage (3) eine Stufe (55) aufweisen/aufweist, die derart angepasst ist, dass der Vorsprung (31) der ersten Lage (3) bzw. der Vorsprung (51) der zweiten Lage (5) mit der Stufe (55) eingreifen kann, dass eine Bewegung der ersten Lage (3) und der zweiten Lage (5) zueinander zumindest in die seitliche Richtung gehemmt ist.

4. Deformationsstruktur nach einem der Patentansprüche 1 bis 3, wobei die erste Lage (3) und die zweite Lage (5) durch Verformung der Stegelemente (7, 7') ferner in eine Richtung parallel zueinander verlagerbar sind.

5. Deformationsstruktur nach einem der Patentansprüche 1 bis 3, wobei die Stegelemente (7, 7') bei dem hohen Kollisionsimpuls spröde und/oder plastisch versagen und wobei die Stegelemente (7, 7') bei dem niedrigen Kollisionsimpuls entsprechend einem Filmscharnier wirken.

6. Deformationsstruktur nach einem der Patentansprüche 1 bis 5, wobei die Stegelemente (7, 7') als Wand-/Flächenelemente ausgebildet sind, die sich über eine gesamte Breite der ersten Lage (3) und der zweiten Lage (5) erstrecken.

7. Deformationsstruktur nach einem der Patentansprüche 1 bis 6, wobei die Vorsprünge (31) der ersten Lage (3) und die Vertiefungen (52) der zweiten Lage (5) sowie die Vertiefungen (32) der ersten Lage (3) und die Vorsprünge (51) der zweiten Lage (5) in einer Ausgangslage der Deformationsstruktur (1) einander gegenüberliegend angeordnet sind.

8. Deformationsstruktur nach einem der Patentansprüche 1 bis 7, wobei die Deformationsstruktur (1) aus einem Kunststoffmaterial, insbesondere einstückig, ausgebildet ist.

9. Deformationsstruktur nach einem der Patentansprüche 1 bis 8, mit einer Vielzahl von Lagen (3, 5), wobei zwei benachbarte Lagen jeweils eine erste Lage (3) und eine zweite Lage (5) bilden.

10. Deformationsstruktur nach Patentanspruch 9, wobei die Verbindungsstege (7, 7') in einem Lagenzwischenraum (4, 6) zweier benachbarter Lagen (3, 5) angeordnet sind und die Verbindungsstege (7, 7') zweier benachbarter Lagenzwischenräume (4, 6) hinsichtlich ihrer Verlagerungswirkung in entgegengesetzte Richtungen orientiert sind.

11. Fußgängerschutzvorrichtung für ein Kraftfahrzeug mit einer Deformationsstruktur (1) nach einem der Patentansprüche 1 bis 10, wobei die Deformationsstruktur (1) zwischen einem Fahrzeugaußenhautelement, insbesondere einer Stoßfängerverkleidung, und einem Karosserieträgerelement, insbesondere einem Stoßfängerquerträger, angeordnet ist.

## Claims

1. Deformation structure (1) having at least one first layer (3) and one second layer (5) which are arranged so as to be spaced apart from one another and displaceable with respect to one another in a deformation direction, wherein the first layer (3) and the second layer (5) have complementary projections (31, 51) and depressions (32, 52) which are formed in such a way that the projections (31) of the first layer (3) and depressions (52) of the second layer (5) and also the projections (51) of the second layer (5) and depressions (32) of the first layer (3) can dip into one another, wherein the first layer (3) and the second layer (5) are connected to one another by way of deformable web elements (7, 7') in such a way that, with a high impulse in the deformation direction, the projections (31) of the first layer (3) dip into depressions (52) of the second layer (5) and also projections (51) of the second layer (5) dip into depressions (32) of the first layer (3), with the result that a deformation of the deformation structure (1) in the deformation direction occurs at a low force level, and, with a low impulse in the deformation direction, the projections (31) of the first layer (3) impinge on the projections (51) of the second layer (5), with the result that a deformation of the deformation structure (3) in the deformation direction occurs at a high force level, **characterized in that**
the projection (31) of the first layer (3) and the projection (51) of the second layer (5) are designed to be complementary to one another in such a way that, with the low impulse in the deformation direction, a form fit between the projection (31) of the first layer (3) and the projection (51) of the second layer (5) occurs in the lateral direction, at least in the lateral direction.

2. Deformation structure according to Patent Claim 1, wherein the projection (51) of the second layer (5) or the projection (31) of the first layer (3) has a depression (53, 33) which is adapted in such a way that the projection (31) of the first layer (3) or the projection (51) of the second layer (5) can engage (dip) into the depression (53, 33), with the result that a movement of the first layer (3) and of the second layer (5) with respect to one another is inhibited at least in the lateral direction.

3. Deformation structure according to Patent Claim 1 or 2, wherein the projection (51) of the second layer (5) and/or the projection (31) of the first layer (3) have/has a step (55) which is adapted in such a way that the projection (31) of the first layer (3) or the projection (51) of the second layer (5) can engage with the step (55) such that a movement of the first layer (3) and of the second layer (5) with respect to one another is inhibited at least in the lateral direction.

4. Deformation structure according to one of Patent Claims 1 to 3, wherein the first layer (3) and the second layer (5) can also be displaced in a direction parallel to one another as a result of deformation of the web elements (7, 7').

5. Deformation structure according to one of Patent Claims 1 to 3, wherein the web elements (7, 7') fail in a brittle and/or plastic manner with the high collision impulse and wherein the web elements (7, 7') act in a manner corresponding to a film hinge with the low collision impulse.

6. Deformation structure according to one of Patent Claims 1 to 5, wherein the web elements (7, 7') are formed as wall/surface elements which extend over an entire width of the first layer (3) and of the second layer (5).

7. Deformation structure according to one of Patent Claims 1 to 6, wherein the projections (31) of the first layer (3) and the depressions (52) of the second layer (5) and also the depressions (32) of the first layer (3) and the projections (51) of the second layer (5) are arranged opposite one another in a starting position of the deformation structure (1).

8. Deformation structure according to one of Patent Claims 1 to 7, wherein the deformation structure (1) is formed, in particular in one piece, from a plastics material.

9. Deformation structure according to one of Patent Claims 1 to 8, having a plurality of layers (3, 5), wherein two adjacent layers in each case form a first layer (3) and a second layer (5).

10. Deformation structure according to Patent Claim 9, wherein the connecting webs (7, 7') are arranged in a layer interspace (4, 6) of two adjacent layers (3, 5), and the connecting webs (7, 7') of two adjacent layer interspaces (4, 6) are oriented in opposite directions with respect to their displacement action.

11. Pedestrian protection device for a motor vehicle having a deformation structure (1) according to one of Patent Claims 1 to 10, wherein the deformation structure (1) is arranged between a vehicle outer skin element, in
particular a bumper fascia, and a body member element, in particular a bumper crossmember.

## Revendications

1. Structure déformable (1) comportant au moins une première couche (3) et une deuxième couche (5) qui sont disposées de manière espacée l'une de l'autre dans une direction de déformation et de manière déplaçable l'une par rapport à l'autre, la première couche (3) et la deuxième couche (5) comprenant des saillies (31, 51) et des évidements (32, 52) complémentaires, lesquels sont réalisés de telle sorte que les saillies (31) de la première couche (3) et des évidements (52) de la deuxième couche (5) ainsi que les saillies (51) de la deuxième couche (5) et des évidements (32) de la première couche (3) peuvent s'enfoncer les uns dans les autres, la première couche (3) et la deuxième couche (5) étant reliées l'une à l'autre par le biais d'éléments nervurés (7, 7') déformables de telle sorte que, lors d'une impulsion élevée dans la direction de déformation, les saillies (31) de la première couche (3) s'enfoncent dans des évidements (52) de la deuxième couche (5) et des saillies (51) de la deuxième couche (5) s'enfoncent dans des évidements (32) de la première couche (3), de sorte qu'une déformation de la structure déformable (1) dans la direction de déformation s'effectue à un niveau de force faible, et que, lors d'une impulsion faible dans la direction de déformation, les saillies (31) de la première couche (3) butent sur les saillies (51) de la deuxième couche (5), de sorte qu'une déformation de la structure déformable (3) dans la direction de déformation s'effectue à un niveau de force élevé,
**caractérisée en ce que**
la saillie (31) de la première couche (3) et la saillie (51) de la deuxième couche (5) sont formées de manière complémentaire l'une par rapport à l'autre de telle sorte que, lors de l'impulsion faible dans la direction de déformation dans la direction latérale, un engagement par complémentarité de forme entre la saillie (31) de la première couche (3) et la saillie (51) de la deuxième couche (5) s'effectue au moins dans la direction latérale.

2. Structure déformable selon la revendication 1, la saillie (51) de la deuxième couche (5) ou la saillie (31) de la première couche (3) comprenant un évidement (53, 33) qui est adapté de telle sorte que la saillie (31) de la première couche (3) ou la saillie (51) de la deuxième couche (5) peut venir en prise (s'enfoncer) dans l'évidement (53, 33), de sorte qu'un mouvement de la première couche (3) et de la deuxième couche (5) l'une par rapport à l'autre soit entravé au moins dans la direction latérale.

3. Structure déformable selon la revendication 1 ou 2, la saillie (51) de la deuxième couche (5) et/ou la saillie (31) de la première couche (3) comprenant un gradin (55) qui est adapté de telle sorte que la saillie (31) de la première couche (3) ou la saillie (51) de la deuxième couche (5) peut venir en prise avec le gradin (55), de sorte qu'un mouvement de la première couche (3) et de la deuxième couche (5) l'une par rapport à l'autre soit entravé au moins dans la direction latérale.

4. Structure déformable selon l'une des revendications 1 à 3, la première couche (3) et la deuxième couche (5) étant en outre déplaçables parallèlement l'une à l'autre dans une direction par déformation des éléments nervurés (7, 7').

5. Structure déformable selon l'une des revendications 1 à 3, les éléments nervurés (7, 7') cédant de manière cassante et/ou plastique lors de l'impulsion de collision élevée et les éléments nervurés (7, 7') agissant de manière correspondante à une charnière film lors de l'impulsion de collision faible.

6. Structure déformable selon l'une des revendications 1 à 5, les éléments nervurés (7, 7') étant réalisés sous forme d'éléments de paroi/de surface qui s'étendent sur toute une largeur de la première couche (3) et de la deuxième couche (5).

7. Structure déformable selon l'une des revendications 1 à 6, les saillies (31) de la première couche (3) et les évidements (52) de la deuxième couche (5) ainsi que les évidements (32) de la première couche (3) et les saillies (51) de la deuxième couche (5) étant disposés en regard les uns des autres dans une position initiale de la structure déformable (1).

8. Structure déformable selon l'une des revendications 1 à 7, la structure déformable (1) étant réalisée à partir d'une matière synthétique, en particulier d'une seule pièce.

9. Structure déformable selon l'une des revendications 1 à 8, comportant une pluralité de couches (3, 5), deux couches adjacentes formant respectivement une première couche (3) et une deuxième couche (5).

10. Structure déformable selon la revendication 9, les nervures de liaison (7, 7') étant disposées dans un espace intermédiaire entre couches (4, 6) de deux couches adjacentes (3, 5) et les nervures de liaison (7, 7') de deux espaces intermédiaires entre couches adjacents (4, 6) étant orientées dans des sens opposés en termes de leur effet de déplacement.

11. Dispositif de protection de piétons pour un véhicule automobile comportant une structure déformable (1) selon l'une des revendications 1 à 10, la structure déformable (1) étant disposée entre un élément de panneau extérieur de véhicule, en particulier un habillage de pare-chocs, et un élément de support de carrosserie, en particulier une traverse de pare-chocs.
